# EUROPEAN PATENT APPLICATION

(11) **EP 4 549 133 A1**
(43) Date of publication of application: **07.05.2025**
(21) Application number: 22954008.3
(22) Date of filing: 04.08.2022
(51) Int. Cl.: B29C 70/34, B29C 43/06

(54) **METHOD FOR PRODUCING COMPOSITE MATERIAL COMPONENT AND APPARATUS FOR PRODUCING COMPOSITE MATERIAL COMPONENT**

(71) Applicant: Jamco Corporation, Mitaka-shi, Tokyo 181-8571 (JP)
(72) Inventor: KURIYAMA, Shuntaro, Tachikawa-shi Tokyo 190-0011 (JP)
(74) Representative: Novaimo
(86) International application number: PCT/JP2022/029891
(87) International publication number: WO 2024/029019

(57) **Abstract**

A method for producing a composite material component includes a process of arranging a prepreg in a movable mold, a process of molding the prepreg, a process of conveying the prepreg together with the movable mold from upstream to downstream, and a process of separating a composite material component formed of the prepreg from the movable mold. The process of arranging the prepreg includes arranging the prepreg between a first movable mold and a second movable mold. The process of molding the prepreg includes having pressure applied on the prepreg from a molding mold via the movable mold, and having heat transmitted from the movable mold to the prepreg. The process of separating the composite material component from the movable mold includes separating the composite material component from both the first movable mold and the second movable mold.

## Description

### [Technical Field]

The present invention relates to a method for producing a composite material component, and an apparatus for producing a composite material component.

### [Background Art]

Composite material components composed of fiber and resin are used in various products, such as aircrafts and automobiles. CFRP (carbon fiber reinforced plastic), GFRP (glass fiber reinforced plastic) etc. are included in the composite material components. In the composite material components, needs for optimizing shape and reducing weight exist. Composite material components serving as a structural member may require a design that optimizes height, weight etc. of the composite material component in response to loading conditions.

In a case where an autoclave manufacturing method is adopted, molds corresponding to the product shape may be used to produce composite material components having a complex shape. However, molding costs are high. Meanwhile, in a case where a pultrusion molding method is adopted, composite material components having a long length may be molded relatively inexpensively. However, according to the pultrusion molding method, in general, it is possible to mold only a composite material component having a fixed cross-sectional shape along a longitudinal direction.

As related arts, Patent Document 1 discloses a continuous molding method of a composite material mold material having different cross sections. According to the molding method disclosed in Patent Document 1, one movable mold whose outer surface dimension differs according to the position of a direction along a longitudinal direction is used to mold a composite material mold material whose cross section differs according to the position of the direction along the longitudinal direction (such as a composite material mold material whose thickness dimension differs according to the position of the direction along the longitudinal direction). According to the technique disclosed in Patent Document 1, a member whose outer surface dimension differs along the longitudinal direction is the molding target, and shapes that may be molded are limited.

Patent Document 2 discloses a method for producing a composite material component. The method for producing a composite material component according to Patent Document 2 includes a first thermoforming process of thermoforming a first prepreg sheet having thermoplasticity into a three-dimensional shape and creating a first three-dimensional prepreg sheet, a laminated body creating process of laminating the first three-dimensional prepreg sheet and a second prepreg sheet to create a prepreg sheet laminated body, and a laminated body molding process of applying heat and pressing force to the prepreg sheet laminated body by a pressing device and molding the prepreg sheet laminated body.

### [Citation List]

### [Patent Document]

[Patent Document 1] Publication of Japanese Patent No. 5322594
[Patent Document 2] Publication of Japanese Patent No. 6411673

### [Disclosure of the Invention]

### [Problems to be Solved by the Invention]

The object of the present invention is to provide a technique for improving a degree of freedom of shape of a composite material component being produced.

### [Means of Solving the Problems]

In order to solve the problems described above, a method for producing a composite material component according to some embodiments includes a process of arranging a prepreg in a movable mold, a process of molding the prepreg, a process of conveying the prepreg together with the movable mold from upstream to downstream, and a process of separating a composite material component formed of the prepreg from the movable mold. The process of arranging the prepreg includes arranging the prepreg between a first movable mold and a second movable mold. The process of molding the prepreg includes applying pressure on the prepreg from a molding mold via the movable mold, and transmitting heat from the movable mold to the prepreg. The process of separating the composite material component from the movable mold includes separating the composite material component from both the first movable mold and the second movable mold.

Further, an apparatus for producing a composite material component according to some embodiments includes a movable mold configured to accommodate a prepreg, a conveying device configured to convey the movable mold in which the prepreg is accommodated from upstream to downstream, a molding mold configured to have pressure and heat applied via the movable mold to the prepreg, a pressing device configured to have a pressing force applied from the molding mold to the movable mold, and a heating device configured to heat the molding mold. The movable mold includes a first movable mold, and a second movable mold that is arranged opposite to the first movable mold via the prepreg.

### [Effects of the Invention]

According to the present invention, a technique of improving the degree of freedom of shape of the composite material component being produced may be provided.

### [Brief Description of the Drawings]

FIG. 1 is a flowchart illustrating one example of a method for producing a composite material component according to a first embodiment.
FIG. 2 is a schematic cross-sectional view illustrating one example of a prepreg.
FIG. 3 is a schematic perspective view schematically illustrating one example of a state in which a prepreg is arranged between a first movable mold and a second movable mold.
FIG. 4 is a schematic perspective view schematically illustrating another example of a state in which a prepreg is arranged between the first movable mold and the second movable mold.
FIG. 5 is a schematic perspective view schematically illustrating one example of a state in which a prepreg conveyed in a first direction is molded by a molding apparatus.
FIG. 6 is a schematic perspective view schematically illustrating another example of a state in which a prepreg conveyed in the first direction is molded by the molding apparatus.
FIG. 7 is a schematic transverse cross-sectional view schematically illustrating a state in which a portion of a process of a method for producing a composite material component according to the first embodiment is executed.
FIG. 8 is a cross-sectional view taken at arrow J-J of FIG. 7.
FIG. 9 is a schematic transverse cross-sectional view schematically illustrating a state in which a portion of the process of the method for producing a composite material component according to the first embodiment is executed.
FIG. 10 is a schematic longitudinal cross-sectional view schematically illustrating a state in which a conveying process is executed.
FIG. 11 is a schematic longitudinal cross-sectional view schematically illustrating a state in which the conveying process is executed.
FIG. 12 is a schematic longitudinal cross-sectional view schematically illustrating a state in which a conveying process is executed according to a modified example.
FIG. 13 is a schematic transverse cross-sectional view schematically illustrating a state in which a molding process is executed.
FIG. 14 is a schematic perspective view schematically illustrating an example of a state in which a composite material component is separated from a movable mold.
FIG. 15 is a schematic perspective view schematically illustrating another example of a state in which the composite material component is separated from the movable mold.
FIG. 16 is a schematic transverse cross-sectional view schematically illustrating a state in which a molding process is executed according to a modified example.
FIG. 17 is a graph illustrating one example of a temperature change of a movable mold.
FIG. 18 is a schematic transverse cross-sectional view schematically illustrating a state in which a molding process is executed according to a second embodiment.

### [Mode for Carrying out the Invention]

A method for producing a composite material component CP according to an embodiment and an apparatus 1 for producing a composite material component will be described with reference to the drawings. In the following description, portions and members having the same functions are denoted with the same reference numbers, and repeated descriptions of members are omitted.

### (First Embodiment)

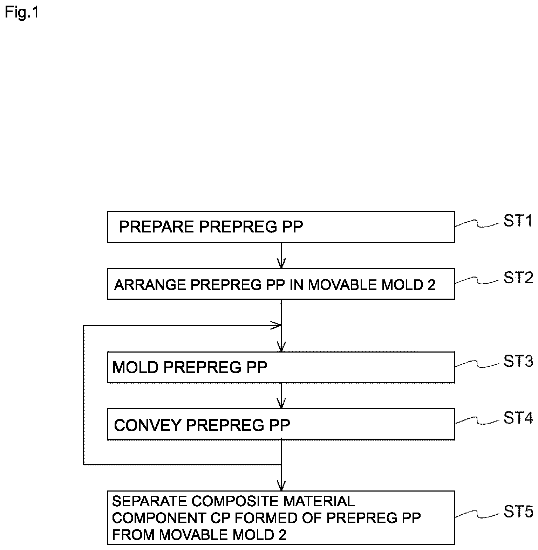

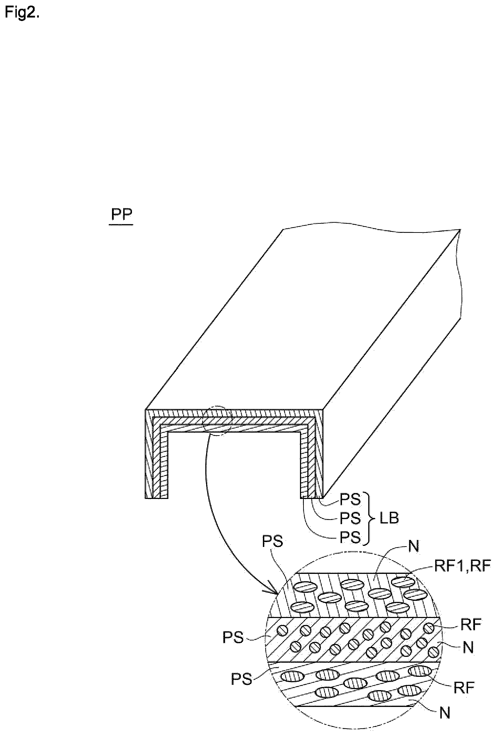

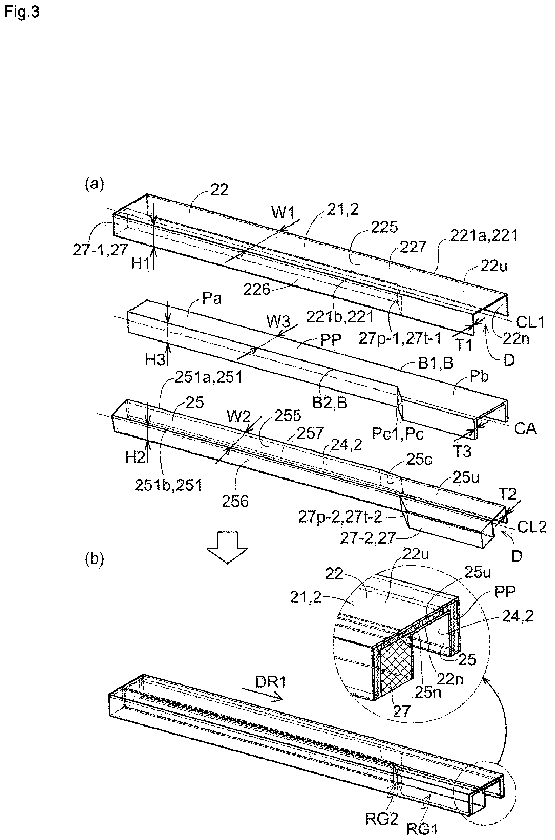

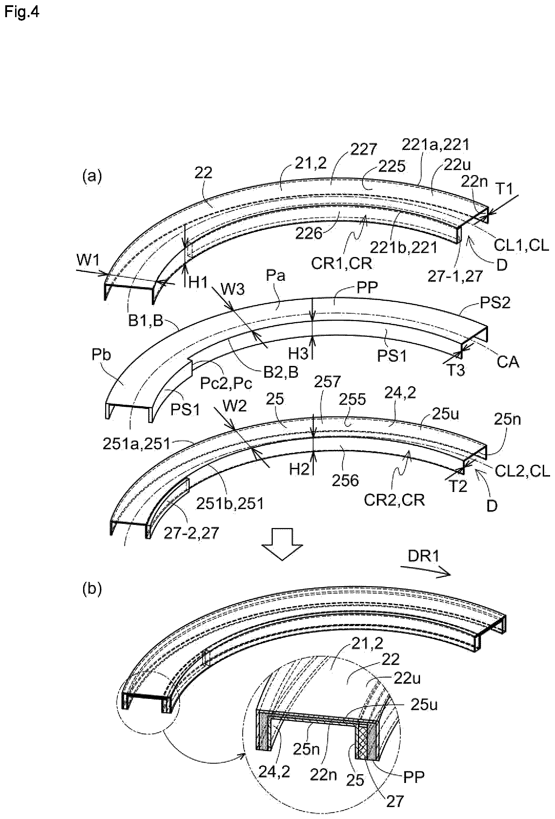

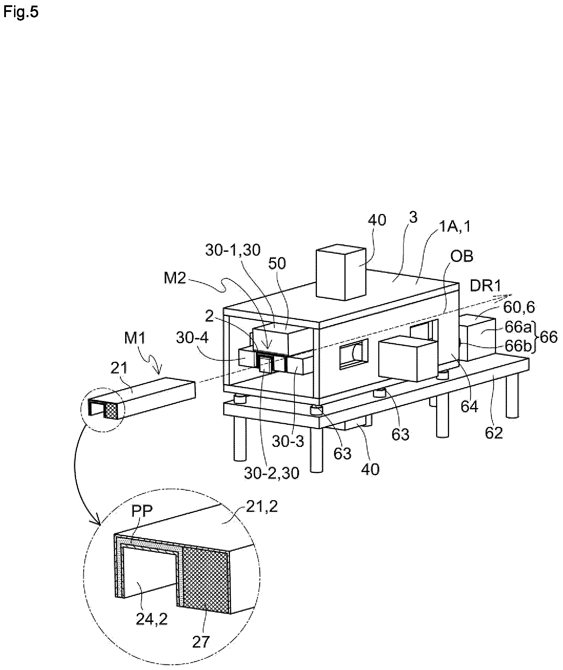

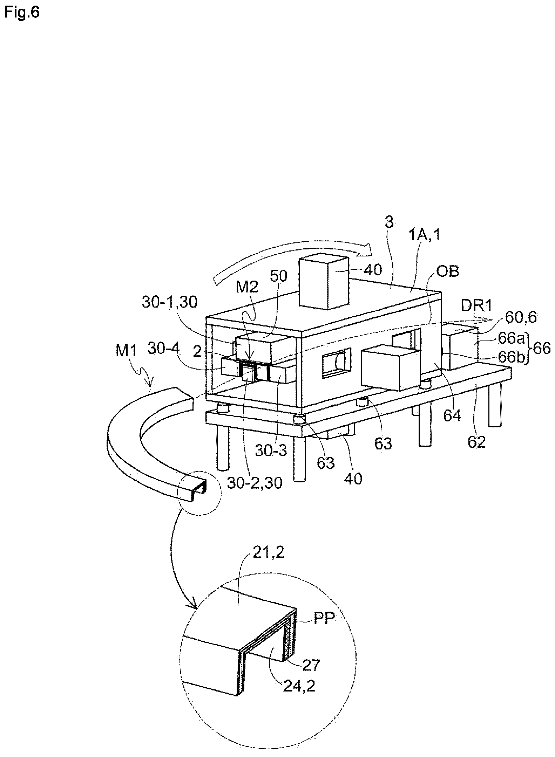

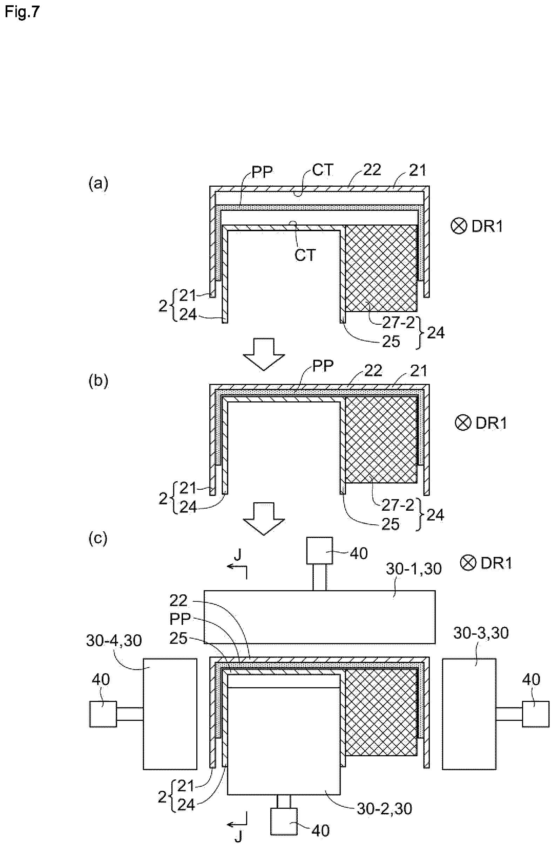

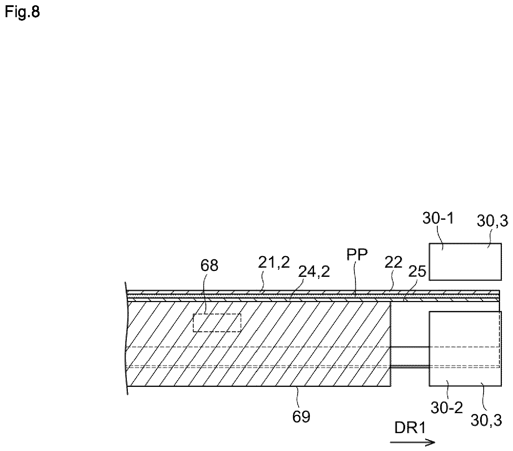

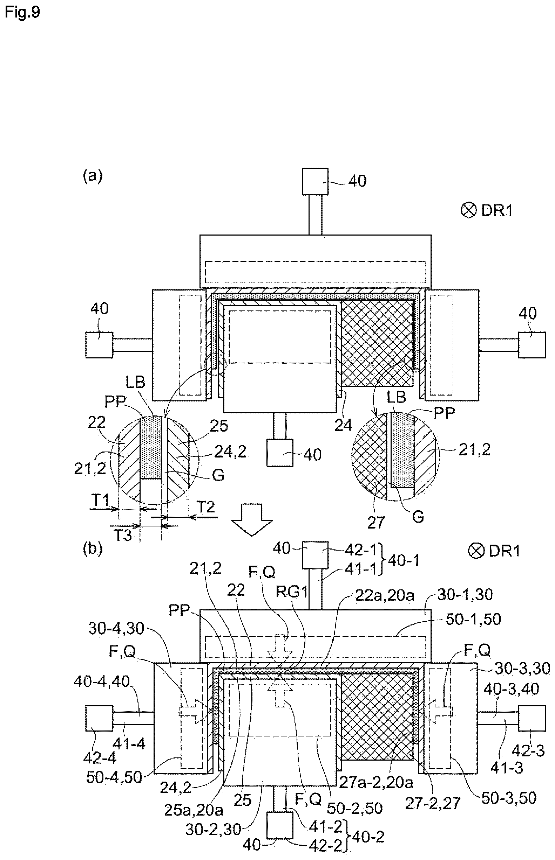

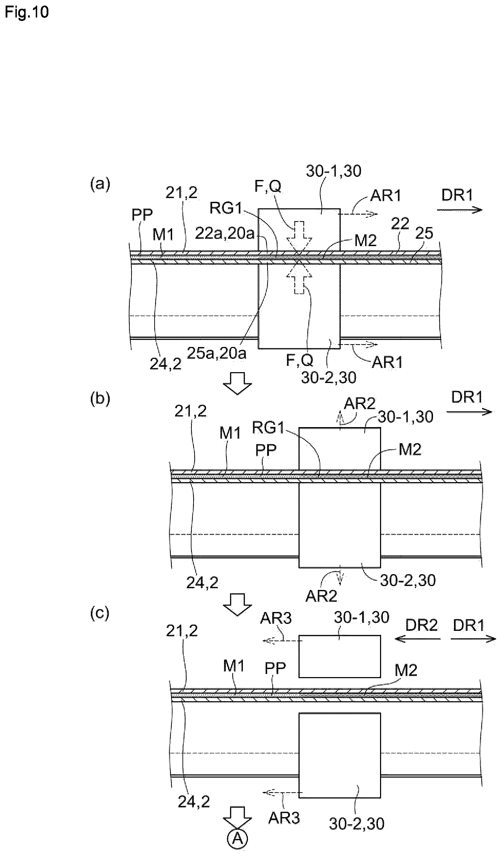

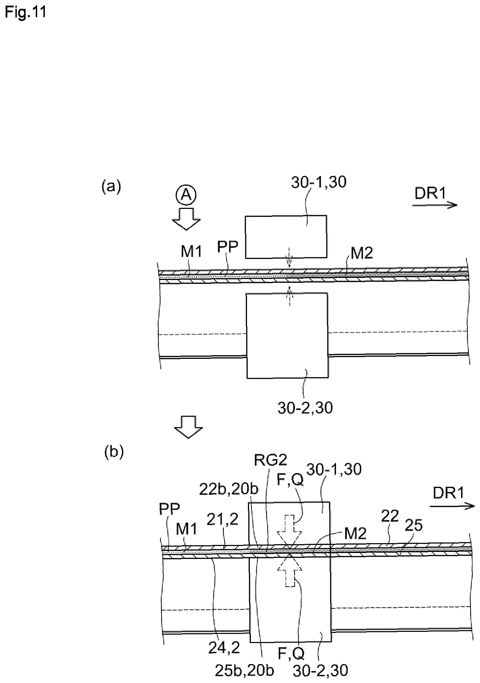

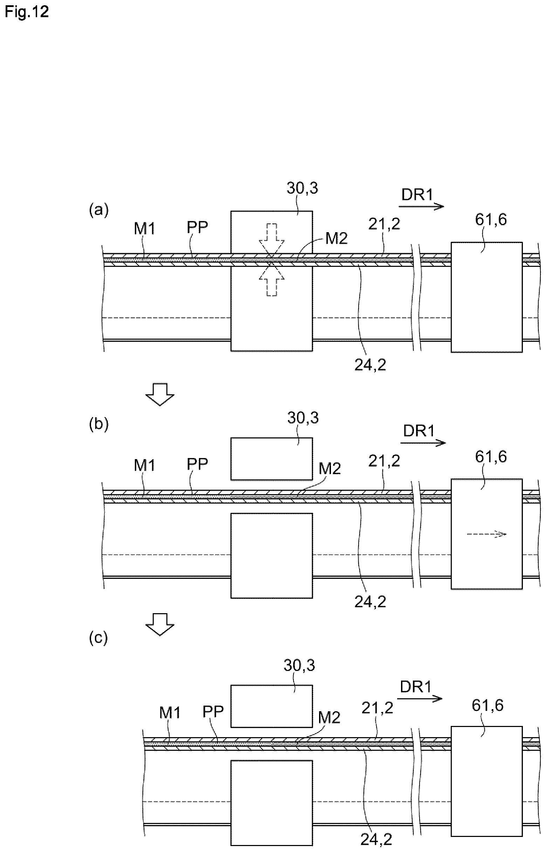

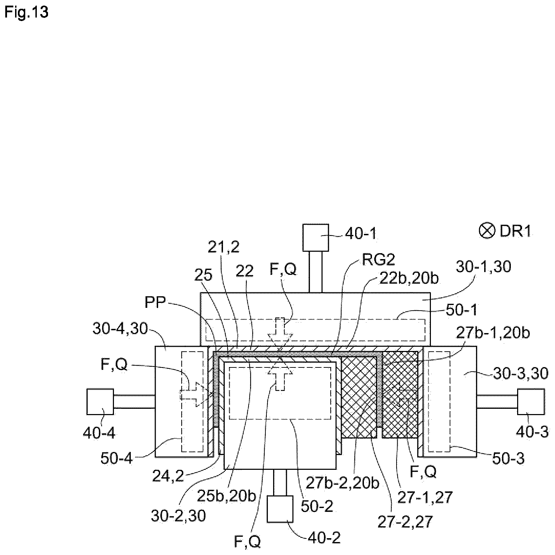

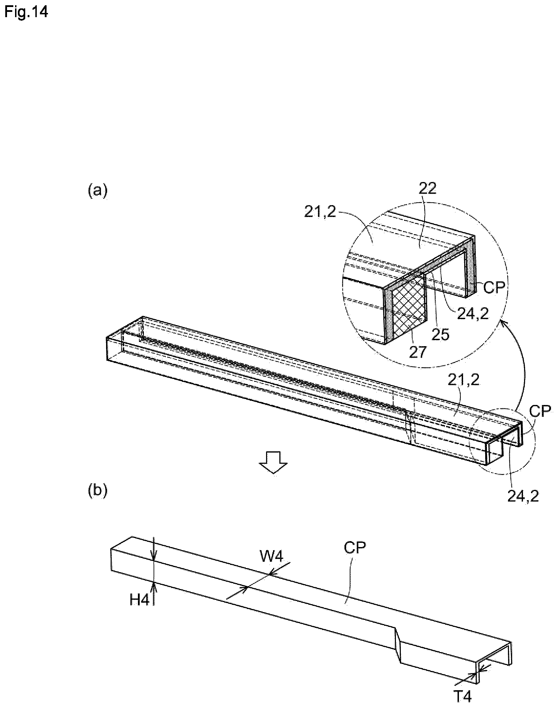

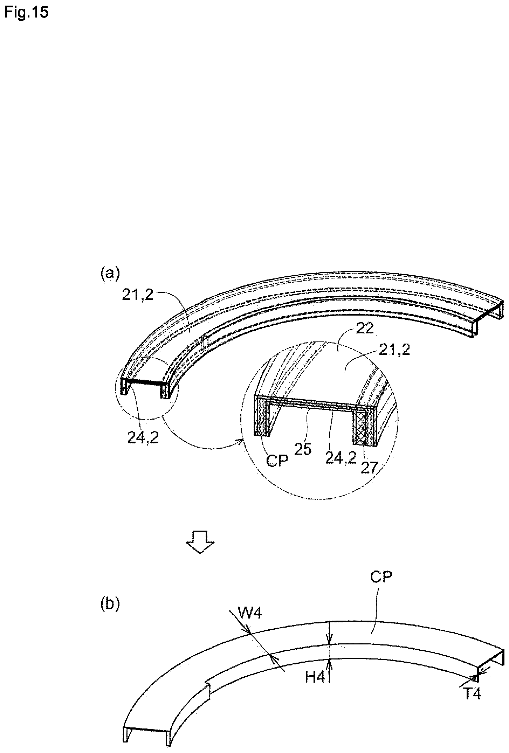

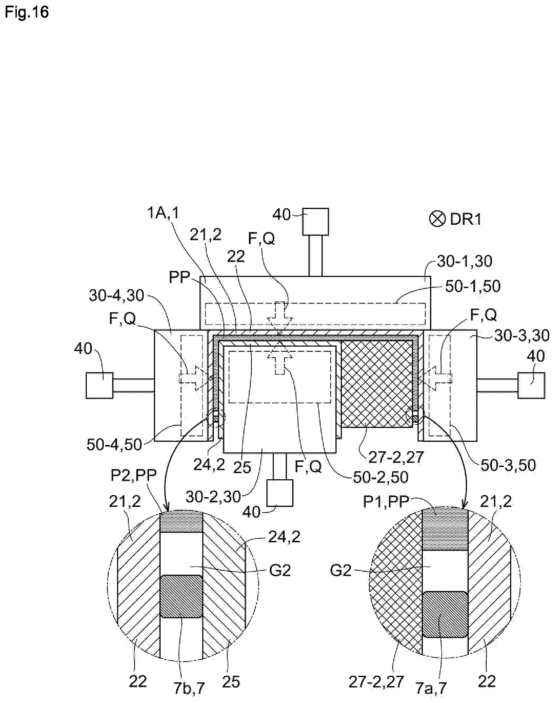

A method for producing the composite material component CP and the apparatus 1A for producing a composite material component according to a first embodiment will be described with reference to FIGs. 1 to 16. FIG. 1 is a flowchart illustrating one example of a method for producing the composite material component CP according to the first embodiment. FIG. 2 is a schematic cross-sectional view illustrating one example of a prepreg PP. FIG. 3 is a schematic perspective view schematically illustrating one example of a state in which the prepreg PP is arranged between a first movable mold 21 and a second movable mold 24. FIG. 4 is a schematic perspective view schematically illustrating another example of a state in which the prepreg PP is arranged between the first movable mold 21 and the second movable mold 24. FIG. 5 is a schematic perspective view schematically illustrating one example of a state in which the prepreg PP conveyed in a first direction DR1 is molded by a molding apparatus 3. FIG. 6 is a schematic perspective view schematically illustrating another example of a state in which the prepreg PP conveyed in a first direction DR1 is molded by a molding apparatus 3. FIG. 7 is a schematic transverse cross-sectional view schematically illustrating a state in which a process of a portion of a method for producing the composite material component CP according to the first embodiment is executed. FIG. 8 is a cross-sectional view taken at arrow J-J of FIG. 7. FIG. 9 is a schematic transverse cross-sectional view schematically illustrating a state in which a portion of a process of the method for producing the composite material component CP according to the first embodiment is executed. FIGs. 10 and 11 are schematic longitudinal cross-sectional views schematically illustrating a state in which the conveying process is executed. FIG. 12 is a schematic longitudinal cross-sectional view schematically illustrating a state in which a conveying process according to a modified example is executed. FIG. 13 is a schematic transverse cross-sectional view schematically illustrating a state in which the molding process is executed. FIG. 14 is a schematic perspective view schematically illustrating one example of a state in which the composite material component CP is separated from a movable mold 2. FIG. 15 is a schematic perspective view schematically illustrating another example of a state in which the composite material component CP is separated from the movable mold 2. FIG. 16 is a schematic transverse cross-sectional view schematically illustrating a state in which a molding process is executed according to a modified example.

### (Method for Production)

In a method for producing a composite material component according to the first embodiment, as illustrated in FIG. 5, molding of the prepreg PP is performed in a state in which the prepreg PP is arranged between the first movable mold 21 and the second movable mold 24. Further, as illustrated in FIG. 5, the prepreg PP is conveyed from upstream to downstream together with the movable mold 2 including the first movable mold 21 and the second movable mold 24.

The respective processes of the method for producing a composite material component according to the first embodiment will be described.

As illustrated in FIG. 2, the prepreg PP is prepared in a first step ST1. The first step ST1 is a preparation process. The prepreg PP prepared in the preparation process includes a reinforcement material RF such as carbon fibers and glass fibers, and a base material N such as resin in which the reinforcement material RF are impregnated. The reinforcement material RF may include continuous fibers such as a fabric material, or noncontinuous fibers such as long fibers or short fibers. Further, the base material N may be composed of a thermosetting resin, or of a thermoplastic resin.

The prepreg PP may be a laminated body LB in which a plurality of prepreg sheets PS are laminated. The lamination of the prepreg sheets PS may be executed using an AFP (Automatic Lamination Machine). Further, as illustrated in FIGs. 3 to 5 of Japanese Patent No 6411673, the preparation of a prepreg as the laminated body LB may include thermoforming each of the thermoplastic prepreg sheets into three-dimensional shapes, and laminating the plurality of thermoplastic prepreg sheet having been subjected to thermoforming. Further, the preparation of a prepreg as the laminated body LB may also be execute continuously by superposing a prepreg sheet being drawn out from a bobbin on other prepreg sheets.

In a case where the prepreg PP is a laminated body LB formed by laminating a plurality of prepreg sheets PS, the orientation of the reinforcement material RF (more specifically, the fiber RF1) within each prepreg sheet PS may differ from the orientation of the fiber within other prepreg sheets arranged adjacent thereto. It is preferable that the orientation of the fiber within each of the prepreg sheets is set appropriately such that the composite material component produced from the prepregs PP has a desired strength.

The preparation process (first step ST1) may include cutting the laminated body LB in which the plurality of prepreg sheets PS are laminated into desired sizes (for example, desired lengths and/or desired widths).

As illustrated in FIG. 3 or FIG. 4, in a second step ST2, the prepreg PP is arranged in the movable mold 2. The second step ST2 is an arranging process.

The arranging process (second step ST2) includes arranging the prepreg PP between the first movable mold 21 and the second movable mold 24. FIG. 3(a) or FIG. 4(a) illustrates a state prior to executing the arranging process (first step ST1), and FIG. 3(b) or FIG. 4(b) illustrates a state after executing the arranging process (second step ST2). In the example illustrated in FIG. 3(a) or FIG. 4(a), the second movable mold 24 and the first movable mold 21 are different members.

In the example illustrated in FIG. 3 or FIG. 4, the first movable mold 21 is an outer mold arranged opposite to an outer surface of the prepreg PP, and the second movable mold 24 is inner mold arranged opposite to an inner surface of the prepreg PP. More specifically, the first movable mold 21 includes a recessed first inner surface 22n arranged opposite to the outer surface of the prepreg PP, and a first outer surface 22u configured to be pressed by a molding mold 30 described later. Further, the second movable mold 24 includes a second outer surface 25u arranged opposite to the inner surface of the prepreg PP, and a recessed second inner surface 25n configured to be pressed by the molding mold 30 described later.

As illustrated in FIG. 5 or FIG. 6, in a third step ST3, the prepreg PP is molded. The third step ST3 is a molding process. In the molding process (third step ST3), the prepreg PP is molded by having heat and pressure applied to the prepreg PP. In a case where the base material N of the prepreg PP is a thermosetting resin, in the molding process, the temperature of the prepreg PP is preferably heated such that the temperature is equal to or higher than a polymerization initiating temperature. Further, in a case where the base material N of the prepreg PP is a thermoplastic resin, the temperature of the prepreg PP is preferably heated to reach a temperature of a melting temperature or higher.

As illustrated in FIG. 9(b), the molding process (third step ST3) includes having pressure F applied to the prepreg PP (such as a first region RG1 of the prepreg PP) from the molding mold 30 via the movable mold 2, and transmitting a heat Q from the movable mold 2 to the prepreg PP (such as the first region RG1 of the prepreg PP).

As illustrated in FIG. 10(a), by executing a process for molding the prepreg PP (third step ST3), an already-molded area M2 is formed from the prepreg PP. Further, in FIG. 10(a), among the area having the dotted hatching, a portion where the dotted density is high corresponds to the already-molded area M2, and a portion where the dotted density is low corresponds to a before-molding area M1 of the prepreg PP. The process for molding the prepreg PP (third step ST3) is executed once or a plurality of times to form the composite material component CP from the prepreg PP.

As illustrated by the broken line arrow of FIG. 5 or FIG. 6, in a fourth step ST4, the prepreg PP is conveyed. The fourth step ST4 is a conveying process. The conveying process includes conveying the prepreg PP together with the movable mold 2 from upstream to downstream.

In the present specification, a direction in which the movable mold 2 is conveyed is defined as the "first direction DR1". As illustrated in FIG. 5, in a case where the movable mold 2 is a mold that is formed to extend along a straight line, the first direction DR1 is a direction along a straight line (more specifically, a straight line along a longitudinal direction of the movable mold 2). Alternatively, as illustrated in FIG. 6, in a case where the movable mold 2 is a mold that is formed to extend along a curved line, the first direction DR1 is a direction along a curved line.

Further, in the present specification, "downstream" means downstream in a conveyance direction of the movable mold 2, and "upstream" means upstream in the conveyance direction of the movable mold 2.

In the example illustrated in FIG. 5 or FIG. 6, the conveying process (fourth step ST4) includes conveying the before-molding area M1 of the prepreg PP together with the movable mold 2 toward the molding apparatus 3 in the first direction DR1. Further, according to the example illustrated in FIG. 5 or FIG. 6, it includes conveying the already-molded area M2 formed of the prepreg PP together with the movable mold 2 from the molding apparatus 3 in the first direction DR1. According to the example illustrated in FIG. 5 or FIG. 6, in order to facilitate understanding of the positional relationship between the molding mold 30 and the movable mold 2, for convenience, the before-molding area M1 and the already-molded area M2 are illustrated in a separated manner, but actually, the before-molding area M1 and the already-molded area M2 are mutually connected.

By alternately executing the above-mentioned molding process (third step ST3) and the above-mentioned conveying process (fourth step ST4), a prepreg PP having a long length may be continuously molded to produce the composite material component CP.

As illustrated in FIG. 14 or FIG. 15, in a fifth step ST5, the composite material component CP formed of the prepreg PP is separated from the movable mold 2. The fifth step ST5 is a separating process.

The separating process (fifth step ST5) includes separating the composite material component CP from both the first movable mold 21 and the second movable mold 24. A further processing (such as a cutting process or a drilling process) may be applied to the composite material component CP being separated from the movable mold 2. Alternatively, or additionally, the composite material component CP separated from the movable mold 2 may be laminated with other composite material components.

The first movable mold 21 and the second movable mold 24 separated from the composite material component CP may be reused as the movable mold 2. Alternatively, the first movable mold 21 and the second movable mold 24 separated from the composite material component CP may be collected and reused as metal resources.

According to the method for producing a composite material component of the first embodiment, molding of the prepreg PP is performed in a state where the prepreg PP is arranged between the first movable mold 21 and the second movable mold 24. Therefore, by setting the shape of the space between the first movable mold 21 and the second movable mold 24 to a desired shape, the prepreg PP having the desired shape may be molded. Thereby, in a state where the method for producing a composite material component according to the first embodiment is adopted, the degree of freedom of shape of the composite material component CP being molded may be enhanced.

### (Apparatus 1A for Producing Composite Material Component)

As illustrated in FIG. 5 or FIG. 6, the apparatus 1A for producing a composite material component according to the first embodiment includes the movable mold 2, a conveying device 6, the molding mold 30, a pressing device 40, and a heating device 50.

The movable mold 2 accommodates the prepreg PP. In the example illustrated in FIG. 5 or FIG. 6, the movable mold 2 includes the first movable mold 21 and the second movable mold 24. The second movable mold 24 is arranged opposite to the first movable mold 21 via the prepreg PP. In the example illustrated in FIG. 5 or FIG. 6, the first movable mold 21 is the outer mold arranged opposite to the outer surface of the prepreg PP, and the second movable mold 24 is the inner mold arranged opposite to the inner surface of the prepreg PP.

The conveying device 6 conveys the movable mold 2 accommodating the prepreg PP from upstream to downstream. In the example illustrated in FIG. 5 or FIG. 6, the conveying device 6 includes a moving device 60 that moves the molding mold 30 and the pressing device 40 along a movement track OB of the movable mold 2.

In the example illustrated in FIG. 5 or FIG. 6, the moving device 60 is a device that moves the molding mold 30 and the pressing device 40 along the movement track OB of the movable mold 2 in a state where the molding mold 30 arranged at a tip portion of the pressing device 40 presses the movable mold 2.

Alternatively, or additionally, as illustrated in FIG. 12(b), the conveying device 6 may include a traction device 61 that is disposed independently from the molding apparatus 3. The traction device 61 is arranged downstream of the molding apparatus 3. The traction device 61 pulls the movable mold 2 from upstream toward downstream. Alternatively, or additionally, the conveying device 6 may include a conveyance roller 68 arranged upstream of the molding apparatus 3 (refer to FIG. 8 if necessary), or may include other types of conveyance devices (such as an intermittent conveyance device) arranged upstream of the molding apparatus 3.

As illustrated in FIG. 9(b), the molding mold 30 causes pressure F and heat Q to act on the prepreg PP via the movable mold 2.

In the example illustrated in FIG. 9(b), the pressing device 40 causes pressing force to act on the movable mold 2 from the molding mold 30. Further, the heating device 50 heats the molding mold 30.

The apparatus 1A for producing a composite material component according to the first embodiment includes the first movable mold 21, and the second movable mold 24 arranged opposite to the first movable mold 21 via the prepreg PP. Thereby, the prepreg PP having a desired shape may be molded by setting the shape of the space between the first movable mold 21 and the second movable mold 24 to a desired shape. Therefore, in a state where the apparatus 1A for producing a composite material component according to the first embodiment is adopted, the degree of freedom of shape of the composite material component CP being produced may be improved.

Of course, an autoclave manufacturing method may be adopted to produce a composite material component having a complex shape, without adopting the method for producing composite material component according to the first embodiment. However, in a case where the autoclave manufacturing method is adopted, a large number of expensive molds must be prepared to correspond to the respective shapes of the composite material component. Further, in a case where the autoclave manufacturing method is adopted, additional operations such as covering the prepreg with a bagging film becomes necessary. Further, in a case where the autoclave manufacturing method is adopted, the length of the composite material component being produced is limited. In contrast, by adopting the method for producing composite material component according to the first embodiment, a composite material component having a complex shape and a long length may be produced inexpensively and efficiently. Further, by adopting the pressing device 40 and the conveying device 6, the production of the composite material component may be automated.

### (Arbitrary Additional Configuration)

Next, with reference to FIGs. 1 to 16, a production method of the composite material component CP according to the first embodiment and an arbitrary additional configuration that may be adopted in the apparatus 1A for producing a composite material component according to the first embodiment will be described.

### (Shape of Prepreg PP)

In the example illustrated in FIG. 3(A), the prepreg PP arranged in the movable mold 2 has a three-dimensional shape. In the present specification, a three-dimensional shape refers to a shape other than a two-dimensional planar shape. The three-dimensional shape is, for example, a shape having at least one bent portion. In the example illustrated in FIG. 3(a), the prepreg PP includes a bent portion B that extends along a longitudinal direction of the prepreg PP. The prepreg PP may include a first bent portion B1 that extends along the longitudinal direction of the prepreg PP, and a second bent portion B2 that extends along the longitudinal direction of the prepreg PP.

A cross-sectional shape of the prepreg PP at a surface perpendicular to the longitudinal direction of the prepreg PP may have an approximately C-shape, as illustrated in FIG. 3(a). Alternatively, the cross-sectional shape of the prepreg PP at a surface perpendicular to the longitudinal direction of the prepreg PP may have an approximately Z-shape, or an approximately L-shape, or any other shape.

In the following description of the present specification, regarding cross-sections of the respective members, a cross section of a surface perpendicular to a longitudinal direction of the relevant member is referred to as a "transverse cross-section". The shape of the transverse cross-section of the prepreg PP may be fixed along the longitudinal direction of the prepreg PP (in other words, the prepreg PP may have a fixed transverse cross-sectional shape). Alternatively, as illustrated in FIG. 3(a), the shape of the transverse cross-section of the prepreg PP may vary along the longitudinal direction of the prepreg PP (in other words, the prepreg PP may have a varying transverse cross-sectional shape). For example, a height dimension H3 of the prepreg PP, a width dimension W3 of the prepreg PP, or a thickness T3 of the prepreg PP may vary along the longitudinal direction of the prepreg PP. In the example illustrated in FIG. 3(a), the prepreg PP includes a first part Pa whose width dimension is a first value, a second part Pb whose width dimension is a second value that is greater than the first value, and a width varying portion Pc where the width dimension varies along the longitudinal direction of the prepreg PP. Further, the width varying portion Pc is arranged between the first part Pa and the second part Pb. The width varying portion Pc may include a tapered portion Pc1 in which the width dimension varies smoothly, or may include a stepped portion Pc2 (refer to FIG. 4(a)).

As illustrated in FIG. 3(a), a longitudinal axis line CA of the prepreg PP may be a straight line. Alternatively, as illustrated in FIG. 4(a), the longitudinal axis line CA of the prepreg PP may include a curved line.

### (First Movable Mold 21 and Second Movable Mold 24)

As illustrated in FIG. 3(a) or FIG. 4(a), at least one of the first movable mold 21 and the second movable mold 24 may preferably include a thin plate having a three-dimensional shape (for example, a thin plate having a thickness of 1.5 mm or less). In the example illustrated in FIG. 3(a), the first movable mold 21 includes a first thin plate 22 having a three-dimensional shape (for example, the first thin plate 22 having a thickness T1 of 1.5 mm or less). Further, the second movable mold 24 includes a second thin plate 25 having a three-dimensional shape (for example, the second thin plate 25 having a thickness T2 of 1.5mm or less).

The thin plate described above may have a trough shape. In the present specification, a trough shape refers to a shape having a long narrow entire shape with a long narrow recess portion D along the entirety thereof.

In the example illustrated in FIG. 3(a) or FIG. 4(a), the first thin plate 22 includes a bent portion 221 that extends along the longitudinal direction of the first thin plate 22. The first thin plate 22 may have two bent portions (221a and 221b) that extend along the longitudinal direction of the movable mold 2. The first thin plate 22 may have a trough shape.

In the example illustrated in FIG. 3(a), the first thin plate 22 includes a first side wall 225, a second side wall 226, and a first connecting wall 227 (more specifically, a first top wall) that connects the first side wall 225 and the second side wall 226. Further, the first side wall 225 is a long narrow wall portion having a flat planar shape, and the second side wall 226 is a long narrow wall portion having a flat planar shape. The first connecting wall 227 is a long narrow wall portion having a flat planar shape.

In the example illustrated in FIG. 4(a), the first thin plate 22 includes the first side wall 225, the second side wall 226, and the first connecting wall 227 (more specifically, a first top wall) that connects the first side wall 225 and the second side wall 226. The first side wall 225 is a wall portion having a curved plate shape, and the second side wall 226 is a wall portion having a curved plate shape. A radius of curvature of the second side wall 226 is smaller than a radius of curvature of the first side wall 225. Further, the first connecting wall 227 is a wall portion having a flat planar shape that extends along a curved line.

In the example illustrated in FIG. 3(a) or FIG. 4(a), the second thin plate 25 has a bent portion 251 that extends along a longitudinal direction of the movable mold 2. The second thin plate 25 may have two bent portions (251a and 251b) that extend along the longitudinal direction of the movable mold 2. The second thin plate 25 may have a trough shape.

In the example illustrated in FIG. 3(a), the second thin plate 25 has a third side wall 255 configured to oppose the first side wall 225 via the prepreg PP, a fourth side wall 256 configured to oppose the second side wall 226 via the prepreg PP, and a second connecting wall 257 connecting the third side wall 255 and the fourth side wall 256 (more specifically, a second top wall). The second connecting wall 257 is a wall configured to oppose the first connecting wall 227 via the prepreg PP. The third side wall 255 is a long narrow wall portion having a flat planar shape, and the fourth side wall 256 is a long narrow wall portion having a flat planar shape. Further, the second connecting wall 257 is a long narrow wall portion having a flat planar shape.

In the example illustrated in FIG. 4(a), the second thin plate 25 includes the third side wall 255 configured to oppose the first side wall 225 via the prepreg PP, a fourth side wall 256 configured to oppose the second side wall 226 via the prepreg PP, and a second connecting wall 257 (more specifically, a second top wall) connecting the third side wall 255 and the fourth side wall 256. The second connecting wall 257 is a wall configured to oppose the first connecting wall 227 via the prepreg PP. The third side wall 255 is a wall portion having a curved planar shape, and the fourth side wall 256 is a wall portion having a curved plate shape. The radius of curvature of the fourth side wall 256 is smaller than the radius of curvature of the third side wall 255. The second connecting wall 257 is a wall portion having a flat planar shape that extends along a curved line.

As illustrated in FIG. 3(a) or FIG. 4(a), a transverse cross-sectional shape of the first thin plate 22 may be approximately C-shaped. Alternatively, the transverse cross-sectional shape of the first thin plate 22 may be approximately L-shaped, or any other shape. As illustrated in FIG. 3(a) or FIG. 4(a), the transverse cross-sectional shape of the second thin plate 25 may be approximately C-shaped. Alternatively, transverse cross-sectional shape of the second thin plate 25 may be an approximately L-shaped, or any other shape.

As illustrated in FIG. 3(a), the transverse cross-sectional shape of the first thin plate 22 may be fixed along the longitudinal direction of the first thin plate 22. Alternatively, the transverse cross-sectional shape of the first thin plate 22 may vary along the longitudinal direction of the first thin plate 22. For example, a height dimension H1 of the first thin plate 22, a width dimension W1 of the first thin plate 22, or the thickness T1 of the first thin plate 22 may vary along the longitudinal direction of the first thin plate 22.

The transverse cross-sectional shape of the second thin plate 25 may be fixed along the longitudinal direction of the second thin plate 25. Alternatively, the transverse cross-sectional shape of the second thin plate 25 may vary along the longitudinal direction of the second thin plate 25. For example, a height dimension H2 of the second thin plate 25, a width dimension W2 of the second thin plate 25, or the thickness T2 of the second thin plate 25 may vary along the longitudinal direction of the second thin plate 25. For example, as illustrated in FIG. 3(a), the second thin plate 25 may include a thickness varying portion 25c whose thickness varies along the longitudinal direction of the second thin plate 25.

As illustrated in FIG. 3(a), a longitudinal axis line CL1 of the first thin plate 22 (or a longitudinal axis line CL2 of the second thin plate 25) may be a straight line. Alternatively, as illustrated in FIG. 4(a), the longitudinal axis line CL1 of the first thin plate 22 (or the longitudinal axis line CL2 of the second thin plate 25) may include a curved line.

In the example illustrated in FIG. 3(a) or FIG. 4(a), the thickness T1 of the first thin plate 22 is preferably 1.5 mm or less. Further, the thickness T2 of the second thin plate 25 is preferably 1.5 mm or less. In a state where the thickness T1 of the first thin plate 22 and/or the thickness T2 of the second thin plate 25 is 1.5 mm or less, the shape of the first thin plate 22 (or the second thin plate 25) receiving pressing force from the molding mold 30 and the shape of the prepreg PP may easily mutually conform (refer to FIG. 9(b)).

Further, in a state where the thickness of a thin plate (the first thin plate 22 and/or the second thin plate 25) arranged between the molding mold 30 and the prepreg PP is 1.5 mm or less, the heat Q may be transmitted efficiently from the molding mold 30 to the prepreg PP through the thin plate (the first thin plate 22 and/or the second thin plate 25).

As an example, as illustrated in FIG. 9(a), in a state where the prepreg PP is arranged between the first movable mold 21 and the second movable mold 24, a case is assumed where a slight gap G exists between the prepreg PP and at least one of the first movable mold 21 and the second movable mold 24. In this case, if at least one of the first movable mold 21 and the second movable mold 24 does not deform, the pressing force acing on the movable mold 2 from the molding mold 30 is not conducted sufficiently to the prepreg PP. Meanwhile, if the first movable mold 21 includes the first thin plate 22 having a thickness of 1.5 mm or less, through the deformation of the first thin plate 22, the pressing force acting on the first thin plate 22 from the molding mold 30 is suitably transmitted to the prepreg PP via the first thin plate 22 being deformed. Further, if the second movable mold 24 includes the second thin plate 25 having a thickness of 1.5 mm or less, through the deformation of the second thin plate 25, the pressing force acting on the second thin plate 25 from the molding mold 30 is suitably transmitted to the prepreg PP via the second thin plate 25 being deformed.

The thickness T1 of the first thin plate 22 may be smaller than the thickness T3 (more specifically, the laminated body LB formed of a plurality of prepreg sheets) of the prepreg PP. Further, the thickness T2 of the second thin plate 25 may be smaller than the thickness T3 (more specifically, the laminated body LB formed of a plurality of prepreg sheets) of the prepreg PP.

The first thin plate 22 and/or the second thin plate 25 is preferably formed of a metal material. If the first thin plate 22 is formed of a metal material, the first thin plate 22 that receives pressing force from the molding mold 30 is easily deformed so as to conform to the surface shape of the prepreg PP. The deformation may include elastic deformation, plastic deformation, thermal deformation, and a combination thereof. Further, if the second thin plate 25 is formed of a metal material, the second thin plate 25 that receives pressing force from the molding mold 30 is easily deformed so as to conform to the surface shape of the prepreg PP. The deformation may include elastic deformation, plastic deformation, thermal deformation, and a combination thereof.

The material of the first thin plate 22 and/or the second thin plate 25 may be composed of iron or stainless steel, considering durability. Alternatively, the material of the first thin plate 22 and/or the second thin plate 25 may be composed of copper or aluminum, considering thermal conductivity.

In the first thin plate 22 and/or the second thin plate 25, a thermal conductivity at a molding temperature of the prepreg PP may be 15 W/m·K or higher, 50 W/m·K or higher, or 100 W/m·K or higher.

According to the illustration of FIG. 9(b), a process of molding the prepreg PP may include (1) deforming the thin plate (22;25) by having the thin plate (22;25) pressed by the molding mold 30, and (2) the deformed thin plate (22;25) applying pressure F on the prepreg PP. In this case, by having the first thin plate 22 and/or the second thin plate 25 pressed by the molding mold 30 and deformed, the shape of the first thin plate 22 and/or the second thin plate 25 conforms to the surface shape of the prepreg PP.

As illustrated in FIG. 4(a), the thin plate (22;25) may include a curved area CR. In the curved area CR, a longitudinal axis line CL of the thin plate may be curved.

In the example illustrated in FIG. 4(a), the first thin plate 22 has a first curved area CR1, and in the first curved area CR1, the longitudinal axis line CL1 of the first thin plate 22 is curved. The entirety of the first thin plate 22 may be composed of the first curved area CR1. Alternatively, a portion of the first thin plate 22 may be composed of the first curved area CR1, and another portion of the first thin plate 22 may be composed of a straight area.

According to the example illustrated in FIG. 4(a), the second thin plate 25 includes a second curved area CR2, and in the second curved area CR2, the longitudinal axis line CL2 of the second thin plate 25 is curved. The entirety of the second thin plate 25 may be composed of the second curved area CR2. Alternatively, a portion of the second thin plate 25 may be composed of the second curved area CR2, and another portion of the second thin plate 25 may be composed of a straight area.

In the example illustrated in FIG. 3(b), the first movable mold 21 includes the first thin plate 22 having a three-dimensional shape, and the first thin plate 22 has the first inner surface 22n opposing the second movable mold 24 via the prepreg PP. The transverse cross-sectional shape of the first inner surface 22n, in other words, the cross-sectional shape of the first inner surface 22n at a surface perpendicular to the longitudinal direction of the first thin plate 22) may be fixed along the longitudinal direction of the first thin plate 22. Alternatively, the transverse cross-sectional shape of the first inner surface 22n may vary along the longitudinal direction of the first thin plate 22.

In the example illustrated in FIG. 3(b), the first thin plate 22 includes the first outer surface 22u configured to be pressed by the molding mold 30. The transverse cross-sectional shape of the first outer surface 22u (in other words, the cross-sectional shape of the first outer surface 22u at a surface perpendicular to the longitudinal direction of the first thin plate 22) may be fixed along the longitudinal direction of the first thin plate 22. In this case, an arbitrary area of the first thin plate 22 conveyed intermittently in the first direction DR1 is suitably pressed by the molding mold 30.

In the example illustrated in FIG. 3(b), the second movable mold 24 includes the second thin plate 25 having a three-dimensional shape, and the second thin plate 25 has the second outer surface 25u opposing the first movable mold 21 via the prepreg PP. The transverse cross-sectional shape of the second outer surface 25u (in other words, the cross-sectional shape of the second outer surface 25u at a surface perpendicular to the longitudinal direction of the second thin plate 25) may be fixed along the longitudinal direction of the second thin plate 25. Alternatively, the transverse cross-sectional shape of the second outer surface 25u may vary along the longitudinal direction of the second thin plate 25.

In the example illustrated in FIG. 3(b), the second thin plate 25 has the second inner surface 25n configured to be pressed by the molding mold 30. The transverse cross-sectional shape of the second inner surface 25n (in other words, the cross-sectional shape of the second inner surface 25n at a surface perpendicular to the longitudinal direction of the second thin plate 25) may be fixed along the longitudinal direction of the second thin plate 25. In that case, the arbitrary area of the second thin plate 25 conveyed intermittently in the first direction DR1 may be pressed suitably by the molding mold 30.

### (Block 27)

As illustrated in FIG. 3(a) or FIG. 4(a), the movable mold 2 may include a block 27 attached to at least either one of the first thin plate 22 and the second thin plate 25.

In the example illustrated in FIG. 3(a) or FIG. 4(a), the movable mold 2includes a first block 27-1 attached to the first thin plate 22. In the example illustrated in FIG 3(a) or FIG. 4(a), the first block 27-1 is attached to an inner surface of the first thin plate 22. The first block 27-1 and the first thin plate 22 function as an outer mold arranged opposite to the outer surface of the prepreg PP.

As illustrated in FIG. 3(a), the first block 27-1 may have a part 27p-1 whose width dimension or height dimension varies continuously along the longitudinal direction of the first block 27-1. The part 27p-1 may be formed by adopting a tapered surface 27t-1 as a portion of a surface of the first block 27-1.

An arbitrary known attaching method may be adopted as the method for attaching the first block 27-1 to the first thin plate 22. The first block 27-1 may be attached to the first thin plate 22 via a fastening member such as a bolt or a screw. Alternatively, or additionally, the first block 27-1 may be attached to the first thin plate 22 by bonding or welding.

The block 27 (such as the first block 27-1) is preferably formed of a metal material. The material of the block 27 (such as the first block 27-1) may be composed of iron or stainless steel, considering durability. Alternatively, the material of the block 27 (such as the first block 27-1) may be composed of copper or aluminum, considering thermal conductivity.

The block 27 (such as the first block 27-1) is preferably composed of a metal material whose thermal conductivity at a molding temperature of the prepreg PP may be 15 W/m·K or higher, 50 W/m·K or higher, or 100 W/m·K or higher.

In the example illustrated in FIG. 3(a) or FIG. 4(a), the movable mold 2 includes a second block 27-2 attached to the second thin plate 25. In the example illustrated in FIG. 3(a) or FIG. 4(a), the second block 27-2 is attached to the outer surface of the second thin plate 25. The second block 27-2 and the second thin plate 25 function as an inner mold arranged opposite to the inner surface of the prepreg PP.

As illustrated in FIG. 3(a), the second block 27-2 may have a part 27p-2 whose width dimension or height dimension continuously varies along the longitudinal direction of the second block 27-2. The part 27p-2 may be formed by adopting a tapered surface 27t-2 as a portion of a surface of the second block 27-2.

An arbitrary known attaching method may be adopted as the method for attaching the second block 27-2 to the second thin plate 25. The second block 27-2 may be attached to the second thin plate 25 via a fastening member such as a bolt or a screw. Alternatively, or additionally, the second block 27-2 may be attached to the second thin plate 25 by bonding or welding.

The second block 27-2 is preferably formed of a metal material. The material of the second block 27-2 may be composed of iron or stainless steel, considering durability. Alternatively, the material of the second block 27-2 may be composed of copper or aluminum, considering thermal conductivity. The second block 27-2 is preferably composed of a material whose thermal conductivity at a molding temperature of the prepreg PP is 15 W/m·K or higher, 50 W/m·K or higher, or 100 W/m·K or higher.

The process for molding the prepreg PP (third step ST3), as illustrated in FIG. 9(b), may be executed in a state where the block 27 attached to one of the first thin plate 22 and the second thin plate 25, and the other of the first thin plate 22 and the second thin plate 25, are in contact with the prepreg PP. According to the example illustrated in FIG. 9(b), the second block 27-2 attached to the second thin plate 25, and the first thin plate 22, are in contact with the prepreg PP. Further, the second thin plate 25 is also in contact with the prepreg PP.

In a state where the movable mold 2 is composed of a combination of thin plate (22;25) and the block 27, the prepreg PP having a more complex shape may be molded using the molding mold 30 and the movable mold 2.

As illustrated in FIG. 3(a) or FIG. 4(a), in a case where the movable mold 2 is composed of a combination of the thin plate (22;25) and the block 27, the prepreg PP whose width dimension W3, height dimension H3, thickness T3, or bending angle (more specifically, the bending angle at the bent portion B) varies along the longitudinal direction of the prepreg PP may be molded continuously without changing the molding mold 30.

As illustrated in FIG. 4(a), in a case where the movable mold 2 is composed of a combination of the thin plate (22;25) that extends along the curved line and the block 27 that extends along the curved line, the prepreg PP whose radius of curvature (such as a radius of curvature of an inner side surface PS1 of the prepreg PP or a radius of curvature of an outer side surface PS2 of the prepreg PP) varies along the longitudinal direction of the prepreg PP may be molded continuously without changing the molding mold 30.

Alternatively, or additionally, in order to enable molding of the prepreg PP having a complex shape, the transverse cross-sectional shape of at least one of the first inner surface 22n of the first thin plate 22 and the second outer surface 25u of the second thin plate 25 may vary along the longitudinal direction of the movable mold 2 (refer to the thickness varying portion 25c of FIG. 3(a)). In the example illustrated in FIG. 3(a), the presence of the thickness varying portion 25c may enable the shape of the movable mold 2 to correspond to the prepreg PP whose width dimension W3 or thickness T3 varies along the longitudinal direction. Thus, a composite material component whose width dimension or thickness varies along the longitudinal direction may be produced.

### (Molding Apparatus 3)

In the example illustrated in FIG. 5 or FIG. 6, the molding apparatus 3 includes the molding mold 30 that presses the movable mold 2 and the pressing device 40 that moves toward the movable mold 2 of the molding mold 30. The molding apparatus 3 may include the moving device 60 that moves the pressing device 40 and the molding mold 30 along the movement track OB of the movable mold 2.

The molding apparatus 3 (more specifically, the molding mold 30 of the molding apparatus 3) is preferably configured to heat and press the prepreg PP intermittently via the movable mold 2. Further, the conveying device 6 (such as the moving device 60 of the molding apparatus 3) is preferably configured to convey the movable mold 2 and the prepreg PP having a long length intermittently in the first direction DR1. As illustrated in FIG. 10 and FIG. 11, the prepreg PP having a long length is heated and pressed intermittently via the movable mold 2 by the molding mold 30, and by having the movable mold 2 and the prepreg PP having a long length conveyed intermittently in the first direction DR1, the prepreg PP having a long length may be molded continuously.

A stroke by which the conveying device 6 (such as the moving device 60) conveys the prepreg PP (in other words, a distance by which the prepreg PP moves in a single conveying process) may be a few mm or may be a few cm. Alternatively, the stroke by which the conveying device 6 (such as the moving device 60) conveys the prepreg PP may be approximately equivalent to a length of the molding mold 30 in a direction along the first direction DR1, may be approximately half the length thereof, or may be approximately 1/3 the length thereof.

Further, a temperature distribution of the molding mold 30 during molding of the prepreg PP may be approximately constant along the first direction DR1. Alternatively, the temperature distribution of the molding mold 30 during molding of the prepreg PP may have a temperature gradient. For example, the above-described temperature gradient may be set such that preheating is performed at an inlet portion of the molding mold 30, a main molding is performed at a center portion in a direction along the first direction DR1 of the molding mold 30, and moderate cooling is performed at an outlet portion of the molding mold 30. Further, in a state where the stroke in which the conveying device 6 (such as the moving device 60) conveys the prepreg PP is long, a process for heating the molding mold 30 and a process for stopping heating of the molding mold 30 may be provided in each cycle including the process for molding the prepreg PP (third step ST3) and the conveying process (fourth step ST4).

### (Molding Mold 30)

In the example illustrated in FIG. 5 or FIG. 6, the apparatus 1A for producing a composite material component includes a plurality of molding molds 30. The apparatus 1A for producing a composite material component may include an upper molding mold 30-1 that presses the movable mold 2 (such as the first movable mold 21) from above, or may include a lower molding mold 30-2 that presses the movable mold 2 (such as the second movable mold 24) from below. Alternatively, or additionally, the apparatus 1A for producing a composite material component may include at least two lateral molding molds (such as a first lateral molding mold 30-3 and a second lateral molding mold 30-4) that sandwich and press the movable mold 2 (such as the first movable mold 21) from the side direction.

In the example illustrated in FIG. 9(b), the process of molding the prepreg PP (third step ST3) is executed in a state where the lower molding mold 30-2 is inserted to a recess portion of the second movable mold 24 relatively movable in the first direction DR1 with respect to the lower molding mold 30-2.

The molding mold 30 may include the heating device 50 such as a heater built therein.

In the example illustrated in FIG. 9(b), the upper molding mold 30-1 includes a first heating device 50-1. The heat generated by the first heating device 50-1 is transmitted via the upper molding mold 30-1 and the movable mold 2 (such as the first movable mold 21) to the prepreg PP. Further, the lower molding mold 30-2 includes a second heating device 50-2. The heat generated by the second heating device 50-2 is transmitted via the lower molding mold 30-2 and the movable mold 2 (such as the second movable mold 24) to the prepreg PP.

In the example illustrated in FIG. 9(b), the first lateral molding mold 30-3 includes a third heating device 50-3. The heat generated by the third heating device 50-3 is transmitted via the first lateral molding mold 30-3 and the movable mold 2 (such as a first side portion of the first movable mold 21) to the prepreg PP. Further, the second lateral molding mold 30-4 includes a fourth heating device 50-4. The heat generated by the fourth heating device 50-4 is transmitted via the second lateral molding mold 30-4 and the movable mold 2 (such as a second side portion of the first movable mold 21) to the prepreg PP.

### (Pressing Device 40)

In the example illustrated in FIG. 9(b), the pressing device 40 includes a first pressing device 40-1 that presses the movable mold 2 (such as an upper surface of the first movable mold 21) by moving the upper molding mold 30-1 downward. The first pressing device 40-1 is, for example, a fluid pressure actuator. The first pressing device 40-1 may include a first movable portion 41-1, and a first driving portion 42-1 that moves the first movable portion 41-1.

Additionally, the pressing device 40 may include a second pressing device 40-2 that presses the movable mold 2 (such as a bottom surface of the second movable mold 24) by moving the lower molding mold 30-2 upward. The second pressing device 40-2 is, for example, a fluid pressure actuator. The second pressing device 40-2 may include a second movable portion 41-2, and a second driving portion 42-2 that moves the second movable portion 41-2.

Alternatively, or additionally, the pressing device 40 may include a third pressing device 40-3 that presses a first side surface of the movable mold 2 (such as a first side surface of the first movable mold 21) by moving the first lateral molding mold 30-3. The third pressing device 40-3 is, for example, a fluid pressure actuator. The third pressing device 40-3 may include a third movable portion 41-3, and a third driving portion 42-3 that moves the third movable portion 41-3.

Further, the pressing device 40 may include a fourth pressing device 40-4 that presses a second side surface of the movable mold 2 (such as second side surface of the first movable mold 21) by moving the second lateral molding mold 30-4. The fourth pressing device 40-4 is, for example, a fluid pressure actuator. The fourth pressing device 40-4 may include a fourth movable portion 41-4, and a fourth driving portion 42-4 that moves the fourth movable portion 41-4.

### (Conveying Device 6)

According to the example illustrated in FIG. 5 or FIG. 6, the conveying device 6 conveys the movable mold 2 accommodating the prepreg PP from upstream toward downstream. According to the example illustrated in FIG. 5 or FIG. 6, the conveying device includes the moving device 60 that moves the molding mold 30 and the pressing device 40 along the movement track OB of the movable mold 2.

More specifically, the moving device 60 includes a movement actuator 66 that moves the molding mold 30 and the pressing device 40 along the movement track OB of the movable mold 2. The movement actuator 66 is connected directly or indirectly to the pressing device 40. According to the example illustrated in FIG. 5 or FIG. 6, the movement actuator 66 is connected via a frame 64 to the pressing device 40.

In the example illustrated in FIG. 5 or FIG. 6, an expansion portion 66b of the movement actuator 66 is connected to the frame 64, and a body portion 66a of the movement actuator 66 is connected to a base 62. Then, by having the expansion portion 66b move with respect to the body portion 66a, the frame 64 moves with respect to the base 62. A bearing 63 (such as a ball bearing) is preferably arranged between the base 62 and the frame 64. In the example illustrated in FIG. 5 or FIG. 6, the frame 64 is supported via a plurality of bearings 63 by the base 62. Alternatively, or additionally, a rail (such as a straight rail or a curved rail) and a slider that slides on the rail may be arranged between the base 62 and the frame 64.

In the example illustrated in FIG. 5, the moving device 60 moves the molding mold 30 and the pressing device 40 along the movement track OB of the movable mold 2, and the movement track OB is a straight track. In the example illustrated in FIG. 6, the moving device 60 moves the molding mold 30 and the pressing device 40 along the movement track OB of the movable mold 2, and the movement track OB is a curved track.

### (Dam 7)

As illustrated in FIG. 16, the apparatus 1A for producing a composite material component may include a dam 7 arranged between the first movable mold 21 and the second movable mold 24. The dam 7 prevents softened material generated from the prepreg PP from flowing out through the gap G2 between the first movable mold 21 and the second movable mold 24 while the process for molding the prepreg PP (third step ST3) is executed.

The dam 7 may include a first dam 7a arranged below a first side portion P1 of the prepreg PP, and a second dam 7b arranged below a second side portion P2 of the prepreg PP.

In the example illustrated in FIG. 16, the first dam 7a is arranged between the second block 27-2 attached to the second thin plate 25 and the first thin plate 22. Further, the second dam 7b is arranged between the first thin plate 22 and the second thin plate 25.

### (Method for Producing Composite Material Component)

In order to promote understanding of the first embodiment, a portion of the process of the method for producing composite material component will be described in further detail.

In the first step ST1, the prepreg PP (more specifically, the prepreg PP having a three-dimensional shape) is prepared (preparation process). The prepreg PP prepared in the preparation process has already been described in detail, such that repeated descriptions regarding the prepreg PP are omitted.

The prepreg PP prepared in the preparation process may be a prepreg having a fixed transverse cross-sectional shape (in other words, a prepreg whose transverse cross-sectional shape does not vary along the longitudinal direction of the prepreg PP), or it may be a prepreg whose transverse cross-sectional shape is not fixed (in other words, a prepreg whose transverse cross-sectional shape varies along the longitudinal direction of the prepreg PP). Further, the prepreg PP prepared in the preparation process may be a straight prepreg, or may be a curved prepreg.

As illustrated in FIG. 7(a) and FIG. 7(b), in the second step ST2, the prepreg PP is arranged in the movable mold 2 (arranging process). The arranging process has already been described in detail, such that repeated descriptions regarding the arranging process are omitted. The arranging process preferably includes integrating the movable mold 2 and the prepreg PP. The integration may be performed through adhesive force of the prepreg PP.

In the separating process (fifth step ST5), the surface of the movable mold 2 may be subjected to surface treatment such as a ceramic coating CT so as to facilitate separation of the composite material component CP formed of the prepreg PP from the movable mold 2. More specifically, a ceramic coating may be applied to the surface of the first movable mold 21 made of metal, and a ceramic coating may be applied to the surface of the second movable mold 24 made of metal.

As illustrated in FIG. 7(c), after executing the second step ST2 (arranging process), prior to executing the third step ST3 (molding process), the prepreg PP and the movable mold 2 are conveyed to a position opposing the molding mold 30 of the molding apparatus 3. As illustrated in FIG. 8, the conveyance may be performed using the conveyance roller 68 that is in contact with the movable mold 2. Further, the conveyance may include moving the movable mold 2 along a guide rail 69 in a state where the movable mold 2 is supported by the guide rail 69.

As illustrated in FIG. 9(b), in the third step ST3, the prepreg PP is molded (molding process). In the molding process, by applying pressure F and heat Q to the prepreg PP, the prepreg PP is molded. In the example illustrated in FIG. 10(a), the molding process includes applying pressure F and heat Q from the molding mold 30 via the movable mold 2 to the first region RG1 of the prepreg PP. In other words, the molding process includes pressing the movable mold 2 by the molding mold 30, and applying pressure F and heat to the prepreg from the movable mold 2 pressed by the molding mold 30. In the example illustrated in FIG. 10(a), in the molding process, the molding mold 30 may press the prepreg PP via the movable mold 2 without being in direct contact with the prepreg PP.

As illustrated in FIG. 16, the process for molding the prepreg PP may be executed in a state where the dam 7 for preventing softened material generated from the prepreg PP from flowing out through the gap G2 between the first movable mold 21 and the second movable mold 24 is arranged between the first movable mold 21 and the second movable mold 24.

The molding process has already been described in detail, such that repeated description of the molding process are omitted.

As illustrated in FIG. 10, in the fourth step ST4, the prepreg PP is conveyed (conveying process). The conveying process may include (1) moving the molding mold 30 and the pressing device 40 in the first direction DR1 in a state where the already-molded area M2 of the prepreg PP (in the example illustrated in FIG. 10(a), the first region RG1) is retained via the movable mold 2 by the molding mold 30 (refer to arrow AR1 in FIG. 10(a)), (2) moving the molding mold 30 such that the molding mold 30 (such as the upper molding mold 30-1) is separated from the movable mold 2 (refer to arrow AR2 in FIG. 10(b)), and (3) relatively moving the molding mold 30 and the pressing device 40 in a second direction DR2 opposite to the first direction DR1 with respect to the prepreg PP (refer to arrow AR3 of FIG. 10(c)). By executing the conveying process, the prepreg PP and the movable mold 2 are moved integrally in the first direction DR1.

The conveying process has already been described in detail, such that repeated descriptions of the conveying process are omitted.

The cycle including the third step ST3 (molding process) and the fourth step ST4 (conveying process) is preferably performed repeatedly.

If "N" is defined as an arbitrary natural number of 2 or greater, a cycle including the third step ST3 (molding process) and the fourth step ST4 (conveying process) may be executed repeatedly for "N" times. In this case, if "K" is defined as an arbitrary natural number of "1" or greater and "N-1" or smaller, after the "K"-th molding process and the "K"-th conveying process have been executed, the "K+1"-th molding process and "K+1"-th conveying process will be executed.

In the example illustrated in FIG. 10(a), the molding process (such as the "K"-th molding process) includes having pressure F and heat Q applied to the first region RG1 of the prepreg PP via a first part 20a of the movable mold 2 from the molding mold 30. The application of pressure F and heat Q to the first region RG1 of the prepreg PP is executed in a state where the first part 20a of the movable mold 2 is in contact with the first region RG1 of the prepreg PP.

According to the example illustrated in FIG. 10(a), the first part 20a of the movable mold 2 includes one part 22a of the first thin plate 22 and one part 25a of the second thin plate 25. Additionally, the first part 20a of the movable mold 2 (in other words, a portion that comes into contact with the first region RG1 of the prepreg PP) may include one part of the block 27 (such as one part 27a-2 of the second block 27-2 in FIG. 9(b)).

In the example illustrated in FIG. 9(b), the application of pressure F and heat Q on the first region RG1 of the prepreg PP is executed in a state where the one part 22a of the first thin plate 22, the one part 25a of the second thin plate 25, and the one part 27a-2 of the second block 27-2 are in contact with the first region RG1 of the prepreg PP.

In the example illustrated in FIG. 11(b), the molding process (such as the "K+1"-th molding process) includes having pressure F and heat Q applied on a second region RG2 of the prepreg PP from the molding mold 30 via a second portion 20b of the movable mold 2 after executing the process for moving the prepreg PP together with the movable mold 2 (for example, after executing the "k"-th conveying process). The application of pressure F and heat Q on the second region RG2 of the prepreg PP is executed in a state where the second portion 20b of the movable mold 2 is in contact with the second region RG2 of the prepreg PP.

As illustrated in FIG. 13, the transverse cross-sectional shape of the second portion 20b of the movable mold 2 (more specifically, the cross-sectional shape of the second portion 20b at a surface perpendicular to the longitudinal direction of the movable mold 2) may differ from the transverse cross-sectional shape of the first part 20a of the movable mold 2 in FIG. 9(b) (more specifically, the cross-sectional shape of the first part 20a at a surface perpendicular to the longitudinal direction of the movable mold 2). If the transverse cross-sectional shape of the second portion 20b differs from the transverse cross-sectional shape of the first part 20a, a composite material component having a more complex shape may be produced.

In the example illustrated in FIG. 13, the second portion 20b of the movable mold 2 includes another part 22b of the first thin plate 22, another part 25b of the second thin plate 25, and one part 27b-1 of the first block 27-1. In other words, the application of pressure F and heat Q on the second region RG2 of the prepreg PP may be executed in a state where another part 22b of the first thin plate 22, another part 25b of the second thin plate 25, and the one part 27b-1 of the first block 27-1 are in contact with the second region RG2 of the prepreg PP.

As illustrated in FIG. 13, the second portion 20b of the movable mold 2 may include the another part 22b of the first thin plate 22, the another part 25b of the second thin plate 25, and another part 27b-2 of the second block 27-2. In other words, the application of pressure F and heat Q on the second region RG2 of the prepreg PP may be executed in a state where the another part 22b of the first thin plate 22, the another part 25b of the second thin plate 25, and the another part 27b-2 of the second block 27-2 are in contact with the second region RG2 of the prepreg PP.

In the example illustrated in FIG. 13, the process of molding the prepreg PP is executed in a state where a part of the prepreg PP is sandwiched between the first block 27-1 attached to the first thin plate 22 and the second block 27-2 attached to the second thin plate 25.

The composite material component CP is formed by executing a plurality of cycles including the process of molding the prepreg PP (third step ST3) and the conveying process (fourth step ST4). The composite material component CP may be a component in which a transverse cross-sectional shape thereof is fixed along the longitudinal direction. Alternatively, as illustrated in FIG. 14 or FIG. 15, the composite material component CP may be a component in which the transverse cross-sectional shape thereof (such as a height dimension H4, a width dimension W4, or a thickness T4 in a cross-section perpendicular to the longitudinal direction) is varied along the longitudinal direction. Further, the composite material component CP may be a straight component (refer to FIG. 14), or a curved component (refer to FIG. 15). Further, in a case where the composite material component CP is a curved component, the radius of curvature of the composite material component CP may be varied along the longitudinal direction of the composite material component CP.

As illustrated in FIG. 14(b) or FIG. 15(b), in the fifth step ST5, the composite material component CP formed of the prepreg PP is separated from the movable mold 2. The fifth step ST5 is a separating process.

The separating process (fifth step ST5) includes separating the composite material component CP from both the first movable mold 21 and the second movable mold 24. A further processing (such as a cutting process or a drilling process) may be applied to the composite material component CP separated from the movable mold 2. Alternatively, or additionally, the composite material component CP separated from the movable mold 2 may be laminated with other composite material components. For example, by laminating a first composite material component produced by the method for producing a composite material component according to the first embodiment with a second composite material component produced by the method for producing a composite material component according to the first embodiment, a thicker composite material component may be produced. The lamination of the first composite material component and the second composite material component may be executed using the apparatus 1A for producing a composite material component according to the first embodiment.

The apparatus 1A for producing a composite material component according to the first embodiment, or the composite material component CP produced by the method for producing a composite material component according to the first embodiment may be a component for an aircraft or an automobile component. The length of the composite material component CP may be 1 m or longer, or 2 m or longer.

### (Second Embodiment)

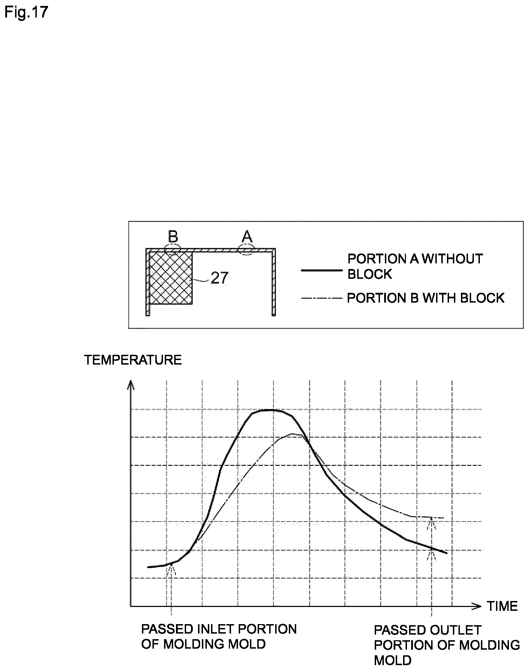

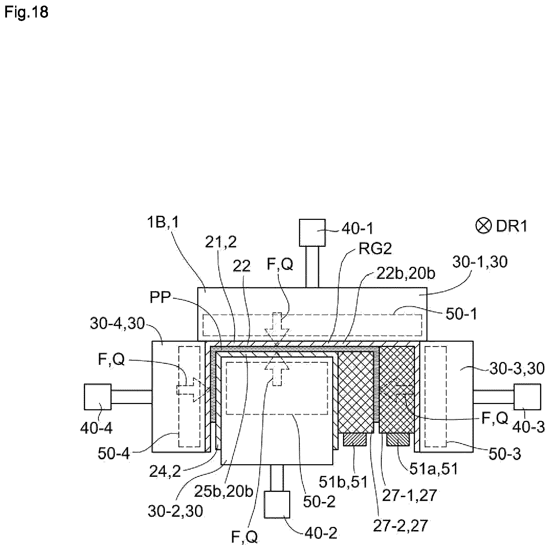

A production method of a composite material component CP and an apparatus 1B for producing a composite material component according to a second embodiment will be described with reference to FIGs. 1 to 18. FIG. 17 is a graph illustrating one example of temperature change of a movable mold. FIG. 18 is a schematic transverse cross-sectional view schematically illustrating a state in which a molding process is executed.

As illustrated in FIG. 17, in a case where a volume or a thermal capacity of the block 27 is high, delay occurs in the rising of temperature of the block 27, and thermoforming of a portion of the prepreg PP in contact with the block 27 (such as curing of the portion) may be insufficient.

Therefore, according to the second embodiment, the block 27 is composed of a material having a high thermal conductivity, or a process for molding the prepreg PP (third step ST3) is executed in a state where the block 27 is in contact with a heater 51 that directly heats the block 27.

The second embodiment is similar to the first embodiment, except for the points described above. In the second embodiment, the points that differ from the first embodiment will mainly be described, and descriptions that have already been described according to the first embodiment will not be repeated. Therefore, even though they are not clearly described in the second embodiment, the descriptions that have already been described according to the first embodiment may naturally be adopted in the second embodiment.

In the example illustrated in FIG. 18, the block 27 (such as the first block 27-1 and/or the second block 27-2) is composed of a material having a high thermal conductivity (more specifically, a metal having a high thermal conductivity).

More specifically, the first block 27-1 and/or the second block 27-2 may be composed of a metal material whose thermal conductivity in the molding temperature of the prepreg PP is 100 W/m·K or more, or 200 W/m·K or more. For example, the first block 27-1 and/or the second block 27-2 may be composed of copper or aluminum.

Alternatively, or additionally, as illustrated in FIG. 18, the process for molding the prepreg PP (third step ST3) may be executed in a state where the block 27 is in contact with the heater 51 that directly heats the block 27. The heater 51 may be attached to the block 27. Alternatively, a configuration may be adopted in which the heater 51 is pushed against the block 27 by an actuator.

In the example illustrated in FIG. 18, in the process for molding the prepreg PP (third step ST3), a first heater 51a (such as a rod-shaped first heater 51a that extends along the longitudinal direction of the first block 27-1) is in contact with the first block 27-1. Alternatively, or additionally, a second heater 51b (such as a rod-shaped second heater 51b that extends along the longitudinal direction of the second block 27-2) may be in contact with the second block 27-2.

The second embodiment exerts a similar effect as the first embodiment. In addition, in the second embodiment, a temperature difference between a portion without the block 27 and a portion with the block 27 is reduced. Therefore, thermoforming of the portion of the prepreg PP in contact with the block 27 (such as curing of the portion) will not be insufficient. Further, wrinkling is less likely to occur in the composite material component formed of the prepreg PP.

The present invention is not limited to the respective embodiments or the respective modified examples described above, and the respective embodiments or the respective modified examples may clearly be modified or varied suitably within the technical scope of the present invention. Further, arbitrary components of the respective embodiments or respective modified examples may be combined with other embodiments or other modified examples, and arbitrary components of respective embodiments or respective modified examples may be omitted.

### [Description of the Reference Numeral]

1, 1A, 1B: apparatus for producing composite material component, 2: movable mold, 3: molding apparatus, 6: conveying device, 7: dam, 7a: first dam, 7b: second dam, 20a: first portion of movable mold, 20b: second portion of movable mold, 21: first movable mold, 22: first thin plate, 22a: part of first thin plate, 22b: other part of first thin plate, 22n: first inner surface of first thin plate, 22u: first outer surface of first thin plate, 24: second movable mold, 25: second thin plate, 25a: part of second thin plate, 25b: other part of second thin plate, 25c: thickness varying portion, 25n: second inner surface of second thin plate, 25u: second outer surface of second thin plate, 27: block, 27-1: first bock, 27-2: second block, 27a-2: part of second block, 27b-1: part of first block, 27b-2: other part of second block, 27p-1, 27p-2: portion whose width dimension or height dimension varies continuously, 27t-1, 27t-2: tapered surface, 30: molding mold, 30-1: upper molding mold, 30-2: lower molding mold, 30-3: first lateral molding mold, 30-4: second lateral molding mold, 40: pressing device, 40-1: first pressing device, 40-2: second pressing device, 40-3: third pressing device, 40-4: fourth pressing device, 41-1: first movable portion, 41-2: second movable portion, 41-3: third movable portion, 41-4: fourth movable portion, 42-1: first driving portion, 42-2: second driving portion, 42-3: third driving portion, 42-4: fourth driving portion, 50: heating device, 50-1: first heating device, 50-2: second heating device, 50-3: third heating device, 50-4: fourth heating device, 51: heater, 51a: first heater, 51b: second heater, 60: moving device, 61: traction device, 62: base, 63: bearing, 64: frame, 66: movement actuator, 66a: body portion, 66b: expansion portion, 68: conveyance roller, 69: guide rail, 221, 221a, 221b: bent portion, 225: first side wall, 226: second side wall, 227: first connecting wall, 251, 251a, 251b: bent portion, 255: third side wall, 256: fourth side wall, 257: second connecting wall, B: bent portion, B1: first bent portion, B2: second bent portion, CA, CL, CL1, CL2: longitudinal axis line, CP: composite material component, CR: curved area, CR1: first curved area, CR2: second curved area, CT: ceramic coating, D: recess portion, G: gap, G2: gap, LB: laminated body, M1: before-molding area, M2: already-molded area, N: base material, OB: movement track, P1: first side portion of prepreg, P2: second side portion of prepreg, PP: prepreg, PS: prepreg sheet, PS1: inner side surface of prepreg, PS2: outer side surface of prepreg, Pa: first portion of prepreg, Pb: second portion of prepreg, Pc: width varying portion of prepreg, Pc1: tapered portion of prepreg, Pc2: stepped portion of prepreg, RF: reinforcement material, RF1: fiber, RG1: first region of prepreg, RG2: second region of prepreg

## Claims

1. A method for producing a composite material component, the method comprising:
a process of arranging a prepreg in a movable mold;
a process of molding the prepreg;
a process of conveying the prepreg together with the movable mold from upstream to downstream; and
a process of separating a composite material component formed of the prepreg from the movable mold,
wherein the process of arranging the prepreg includes arranging the prepreg between a first movable mold and a second movable mold,
wherein the process of molding the prepreg includes
having pressure applied on the prepreg from a molding mold via the movable mold; and
having heat transmitted from the movable mold to the prepreg, and
wherein the process of separating the composite material component from the movable mold includes separating the composite material component from both the first movable mold and the second movable mold.

2. The method for producing a composite material component according to claim 1,
wherein the prepreg has a three-dimensional shape, and
wherein at least one of the first movable mold and the second movable mold includes a thin plate having a three-dimensional shape.

3. The method for producing a composite material component according to claim 2,
wherein a thickness of the thin plate is 1.5 mm or less.

4. The method for producing a composite material component according to claims 2 or 3,
wherein the thin plate is formed of a metal material.

5. The method for producing a composite material component according to any one of claims 2 to 4,
wherein the process of molding the prepreg includes
the thin plate being deformed by the thin plate being pressed by the molding mold, and
the deformed thin plate having pressure applied on the prepreg.

6. The method for producing a composite material component according to any one of claims 2 to 5,
wherein the thin plate has a trough shape.

7. The method for producing a composite material component according to any one of claims 2 to 6,
wherein the thin plate has a curved area, and
wherein a longitudinal axis line of the thin plate is curved in the curved area.

8. The method for producing a composite material component according to any one of claims 2 to 7,
wherein the first movable mold includes a first thin plate having a three-dimensional shape,
wherein the first thin plate has a first inner surface opposed to the second movable mold via the prepreg,
wherein the second movable mold includes a second thin plate having a three-dimensional shape, and
wherein the second thin plate includes a second outer surface opposed to the first movable mold via the prepreg.

9. The method for producing a composite material component according to claim 8,
wherein the movable mold includes a block attached to one of the first thin plate and the second thin plate, and
wherein the process of molding the prepreg is executed in a state where the block and the other of the first thin plate and the second thin plate are in contact with the prepreg.

10. The method for producing a composite material component according to claim 9,
wherein the block is composed of a metal material whose thermal conductivity at a molding temperature of the prepreg is 100 W/m·K or greater, or
wherein the process of molding the prepreg is executed in a state where the block is in contact with a heater that immediately heats the block.

11. The method for producing a composite material component according to any one of claims 1 to 10,
wherein the process of molding the prepreg includes
having pressure and heat applied from the molding mold via a first portion of the movable mold to a first region of the prepreg, and
after executing a process of moving the prepreg together with the movable mold, having pressure and heat applied from the molding mold via a second portion of the movable mold to a second region of the prepreg.

12. The method for producing a composite material component according to claim 11,
wherein a transverse cross-sectional shape of the second portion of the movable mold differs from a transverse cross-sectional shape of the first portion of the movable mold.

13. The method for producing a composite material component according to any one of claims 1 to 12,
wherein the process of molding the prepreg is executed in a state where a dam for preventing softened material from flowing out through a gap between the first movable mold and the second movable mold is arranged between the first movable mold and the second movable mold.

14. An apparatus for producing a composite material component comprising:
a movable mold configured to accommodate a prepreg;
a conveying device configured to convey the movable mold in which the prepreg is accommodated from upstream to downstream;
a molding mold configured to have pressure and heat applied via the movable mold to the prepreg;
a pressing device configured to have a pressing force applied from the molding mold to the movable mold; and
a heating device configured to heat the molding mold,
wherein the movable mold includes
a first movable mold, and
a second movable mold that is arranged opposite to the first movable mold via the prepreg.

15. The apparatus for producing a composite material component according to claim 14,
wherein the first movable mold includes a first thin plate having a three-dimensional shape,
wherein the second movable mold includes a second thin plate having a three-dimensional shape,
wherein the first thin plate has a first inner surface opposed to the second movable mold via the prepreg,
wherein the second thin plate has a second outer surface opposed to the first movable mold via the prepreg, and
wherein the movable mold includes a block attached to at least one of the first thin plate and the second thin plate.
